(19) Europäisches Patentamt
European Patent Office
Office européen des brevets

(11) **EP 1 129 807 B1**

(12) **EUROPÄISCHE PATENTSCHRIFT**

(45) Veröffentlichungstag und Bekanntmachung des Hinweises auf die Patenterteilung:
**06.06.2007 Patentblatt 2007/23**

(51) Int Cl.:
***B23H 7/10*** *(2006.01)*

(21) Anmeldenummer: **01101551.8**

(22) Anmeldetag: **24.01.2001**

(54) **Drahtspannsystem für eine Funkenerosionsvorrichtung, sowie Verfahren zum Spannen einer drahtförmigen Bearbeitungselektrode**

Système de mise sous du fil dans une machine d'usinage par électroérosion, et méthode pour réguler la tension de l'électrode d'usinage

Wire tensioning system for electroerosion machine, and method for applying tension on the wire electrode

(84) Benannte Vertragsstaaten:
**CH DE ES FR GB IT LI**

(30) Priorität: **29.02.2000 DE 10009556**

(43) Veröffentlichungstag der Anmeldung:
**05.09.2001 Patentblatt 2001/36**

(73) Patentinhaber: **AGIE SA**
**6616 Losone (CH)**

(72) Erfinder:
• **Baiardi, Giorgio**
**6600 Locarno (CH)**
• **Wehrli, Peter, Dipl.-Ing.**
**6612 Ascona (CH)**

(74) Vertreter: **Niederkofler, Oswald et al**
**Samson & Partner**
**Patentanwälte**
**Widenmayerstrasse 5**
**80538 München (DE)**

(56) Entgegenhaltungen:
**EP-A- 0 792 714**    **DE-A- 3 923 261**
**US-A- 5 866 865**

**Beschreibung**

Die Erfindung betrifft ein Drahtspannsystem für eine drahtförmige Bearbeitungselektrode oder dergleichen einer Funkenerosionsvorrichtung der im Oberbegriff des Anspruchs 1 angegebenen Gattung. Auch bezieht sich die Erfindung auf ein Verfahren zum Spannen einer drahtförmigen Bearbeitungselektrode oder dergleichen einer Funkenerosionsvorrichtung, mit einer im Drahtzufuhrbereich angeordneten Bremsrolle und/oder einer im Drahtabfuhrbereich angeordneten Zugrolle.

Der hier verwendete Begriff "Drahtspannung" bezieht sich im Prinzip auf die auf die Bearbeitungselektrode aufgebrachte Drahtzugkraft, unter der Annahme eines konstanten Elektrodendurchmessers.

Ein Beispiel für ein gattungsgemäßes Drahtspannsystem und - verfahren ist in der DE 196 07 705 A1 beschrieben. Dort wird die drahtförmige Bearbeitungselektrode von einer Vorratsspule abgezogen, und über mehrere Umlenkrollen zur Bremsrolle geführt. Die Bearbeitungselektrode umschlingt die Bremsrolle, läuft dann über weitere Umlenkrollen zu einem Klemmrollenpaar, und wird von dort zu einem Entsorgungsbehälter transportiert. Des weiteren ist vorgeschlagen, zum automatischen Umwickeln der Bremsrolle beim Einfädeln der Drahtelektrode eine von einem Fluid durchströmte Injektordüse vorzusehen. Diese ist derart ausgestaltet, daß sie während des Einfädelns eine Fluidströmung tangential zur Bremsrolle erzeugt, so daß das Erodierdrahtende beim Einfädeln um die Bremsrolle herumgeführt wird.

Die kontrollierte Einstellung der Drahtspannung der Drahtelektrode im Arbeitsbereich der Funkenrerosionsmaschine erfolgt gemäß DE 196 07 705 A1 rein mechanisch, nämlich mit Hilfe der Bremsrolle und dem eine Zugspannung ausübenden Klemmrollenpaar im Entsorgungsbereich des Drahtlaufsystems. Die im Zufuhrbereich des Drahtlaufsystems benötigte Drahtgrundspannung wird durch eine Tänzerrolle in Kombination mit einem Spulenmotor im Abwicklungsbereich aufgebaut, d.h. ebenfalls rein mechanisch. Die diversen im bekannten Drahtlaufsystem angeordneten Düsen werden lediglich im Einfädelmodus zur Erzeugung eines Einfädelfluidstrahls mit Fluid beaufschlagt, welcher eine neue oder gebrochene Drahtelektrode in das Drahtlaufsystem einfädelt.

US-A-5 866 865 (entspricht DE 196 46 677 A1) offenbart ein Drahtspannsystem und ein Verfahren nach den Oberbegriffen von Ansprüchen 1 und 18. Diese Druckschrift nimmt inhaltlich Bezug auf das obige Drahtlaufsystem der DE 196 007 705 Al, so daß die vorstehenden Ausführungen bezüglich der Erzeugung der Drahtspannung hierfür analog gelten. Auch hier wird die Drahtspannung während der Bearbeitung der Funkenerosionsmaschine rein mechanisch aufgebaut, und zwar zufuhrseitig durch eine Bremsrolle in Kombination mit einer Tänzerrolle und abfuhrseitig in Kombination mit einem Klemmrollenpaar. Die im Drahtlaufsystem angeordnete fluiddurchströmte Düse der unteren Drahtlauf-Umlenkvorrichtung dient zum Erzeugen einer Fluidströmung, wodurch im Einfädelmodus der Maschine die Spitze der Bearbeitungselektrode aus der Arbeitszone in die Umlenkvorrichtung angesaugt und bis zum Entsorgungsbereich mitgenommen wird. Sobald die Drahtelektrode eingefädelt ist, wird der Fluidbetrieb deaktiviert.

Es ist ein Ziel der vorliegenden Erfindung, ein Drahtspannsystem und Verfahren bereitzustellen, um eine noch besser kontrollierbare Einstellung der Drahtspannung zu ermöglichen.

Nach einem ersten Aspekt erreicht die vorliegende Erfindung dieses Ziel durch den Gegenstand des unabhängigen Anspruches 1. Ein weiterer Aspekt der Erfindung ist auf eine Verfahren nach dem Gegenstand von Anspruch 18 gerichtet. Vorteilhafte Ausführungsbeispiele der Erfindung sind ergeben sich aus den abhängigen Ansprüchen, der nachfolgenden Beschreibung und der Zeichnung.

Danach stellt die Erfindung ein Drahtspannsystem für eine drahtförmige Bearbeitungselektrode, oder dergleichen, einer Funkenerosionsvorrichtung bereit, bei welchem die Bearbeitungselektrode eine im Drahtzufuhrbereich angeordnete Bremsrolle und/oder eine im Drahtabfuhrbereich angeordnete Zugrolle zumindest teilweise umschlingt. Ferner ist eine in Drahtlaufrichtung vor der Bremsrolle und/oder in Drahtlaufrichtung hinter der Zugrolle angeordnete fluiddurchströmte Düse vorgesehen, durch welche die Bearbeitungselektrode geführt wird und welche eine von der Brems- und/oder Zugrolle weg gerichtete Zugkraft auf die Bearbeitungselektrode zum Bewirken einer Seilreibung zwischen der Bearbeitungselektrode und der Brems- und/oder Zugrolle ausübt.

Bei einem Verfahren zum Spannen einer drahtförmigen Bearbeitungselektrode, oder dergleichen, einer Funkenerosionsvorrichtung übt die fluiddurchströmte Düse eine von der Brems- und/oder Zugrolle weg gerichtete Zugkraft auf die Bearbeitungselektrode aus, um eine Seilreibung zwischen der Bearbeitungselektrode und der Brems- und/oder Zugrolle zu bewirken.

Hierbei wird unter dem Begriff "Bremsrolle" allgemein eine beliebige Rolle verstanden, die im Drahtzufuhrbereich, also in Drahtlaufrichtung gesehen vor dem Arbeitsbereich der Funkenerosionsmaschine, in welchem das Werkstück liegt, bevorzugt aber in Nähe des oberen Drahtführungskopfes einer Schneiderosionsmaschine, angeordnet ist. Entsprechend liegt die "Zugrolle" in Drahtlaufrichtung betrachtet nach dem Arbeitsbereich, d.h. im Drahtabfuhrbereich der Funkenerosionsmaschine, bevorzugt aber in Nähe des unteren Drahtführungskopfes einer Schneiderosionsmaschine.

Erfindungsgemäß wird die der Brems- und/oder Zugrolle zugeordnete fluiddurchströmte Düse dazu verwendet, eine Grundspannung in die Bearbeitungselektrode im Drahtzufuhr- bzw. Drahtabfuhrbereich des Elektrodenlaufsystems einzuleiten, und zwar in Drahtlaufrichtung gesehen vor der Bremsrolle bzw. nach der Zugrolle. Dies geschieht dadurch, daß die Düse eine von der Brems- bzw. Zugrolle weggerichtete Zugkraft (nachfolgend "Grundzugkraft" genannt) auf die - bereits eingefädelte - Bearbeitungselektrode aufbringt. Dadurch gelangt die Bearbeitungselektrode in einen reibungsbedingten Wirkeingriff mit der Brems- und/oder Zugrolle. Die Drahtspannung im Arbeitsbereich der Funkenerosionsmaschine (nachfolgend "Wirkspannung" genannt), d.h. die Spannung - in Drahtlaufrichtung gesehen - unmittelbar hinter der Bremsrolle bzw. unmittelbar vor der Zugrolle, wird dann durch die Wechselwirkung zwischen Draht und Brems- und/oder Zugrolle nach dem Seilreibungsprinzip aufgebaut. Hierbei kann auf besonders vorteilhafte Weise der Effekt ausgenutzt werden, daß bereits eine relativ kleine durch die Düse eingeleitete Zugspannung (nachfolgend "Grundspannung" genannt) ausreichen kann, um die benötigte Wirkspannung durch Seilreibung aufzubauen (bzw. die Wirkspannung wesentlich zu beeinflussen). Die Bearbeitungselektrode umschlingt nämlich die Brems- und/oder die Zugrolle und steht aufgrund der durch die beschleunigenden/verzögernden Wirkung der Düse erzeugten Grundzugkraft mit der jeweiligen Rolle aufgrund von Reibungskräften zwischen der Drahtoberfläche und der Rollenperipherie in Wirkeingriff. Gemäß der hier anzuwenden Seilreibungsformel nach Euler gilt dann:

$$F2 = F1 \times e^{\alpha\mu},$$

wobei F1 die die Grundspannung erzeugende Grundzugkraft, F2 die die Wirkspannung erzeugende Wirkzugkraft, $\alpha$ der Umschlingwinkel, und $\mu$ der Reibungskoeffizient ist. Demnach ist die Wirkzugkraft im wesentlichen proportional zur Grundzugkraft. Ist das Produkt aus Umschlingwinkel und Reibungskoeffizient groß genug, wird das System selbsthemmend, d.h. F2 wird unabhängig von F1 für F1 > 0.

Demnach kann mit der Erfindung u.a. folgendes erreicht werden:

- größere Spannkräfte im Bearbeitungsbereich;
- höhere Zuverlässigkeit;
- bessere Bedienerfreundlichkeit;
- bessere Möglichkeiten zur Automatisierung des Elektrodenhandlings.

Vorteilhaft ist es, wenn die Düse als Venturidüse ausgestaltet ist, und eine Fluidströmung bewirkt, und dadurch die Zugkraft auf die Bearbeitungselektrode ausübt. Das Fluid ist besonders bevorzugt die zur Funkenerosion verwendete Arbeitsflüssigkeit selbst. Vorzugsweise ist die Düse eine Injektordüse. Diese kann z.B. als Zweikammerdüse mit zwei im wesentlichen koaxial zueinander angeordneten Düsenkammern ausgeführt sein. Vorteilhaft ist die Bearbeitungselektrode durch eine der Düsenkammern der Injektordüse hindurchgeführt. Die andere, insbesondere die äußere Düsenkammer ist bevorzugt mit einer Druck-Fluidversorgung verbunden. Besonders vorteilhaft ist es, wenn die innere Düsenkammer - in Drahtlaufrichtung gesehen - aus der äußeren Düsenkammer hervorsteht. Auch ist von Vorteil, wenn zwischen der Düse und der ihr zugeordneten Zug- oder Bremsrolle keine weiteren Rollen, z.B. Umlenkrollen oder dergleichen, liegen. Die Düse ist also im allgemeinen relativ nahe bei der ihr zugeordneten Rolle angeordnet.

Besonders vorteilhaft ist außerdem ein Mittel vorgesehen, welches die Zugrolle mit einem Drehmoment beaufschlagt, und/oder ein zusätzliches Mittel zur Drehmomentbeaufschlagung der Bremsrolle. Hierzu können beispielsweise entsprechende Motoren dienen, welche die Rollen antreiben bzw. bremsen. Z.B. kann das Mittel ein Zugrollenmotor sein, der die Zugrolle antreibt, und das zusätzliche Mittel ein Bremsrollenmotor, der die Bremsrolle bremst.

Die die Reibwirkung hervorrufende Düse ist erfindungsgemäß so angeordnet, daß die von ihr auf die Bearbeitungselektrode ausgeübte Zugkraft von der zugeordneten Rolle weggerichtet ist. Beispielsweise kann die Düse - in Drahtlaufrichtung gesehen nach der Zugrolle liegen. Denkbar ist auch, die Düse vor der Bremsrolle anzuordnen, d.h. vor dem Arbeitsbereich. Diese Ausgestaltung des Drahtspannsystems ist besonders bei relativ dünnen Erodierdrähten von Vorteil. Hier erzeugt der von der Düse erzeugte Fluidjet die Wirkzugkraft; die Grundzugkraft vor der Bremsrolle wird bevorzugt durch eine weitere Düse oder mittels anderer Hilfsmittel wie Gewichtsspannung oder Tänzerrolle aufgebaut.

Besonders vorteilhaft ist auch ein Drahtspannsystem, welches eine Zugrolle aufweist, und wobei die Düse eine der Zugrolle zugeordnete Düse ist, welche in Drahtlaufrichtung gesehen hinter der Zugrolle liegt, und eine von der Zugrolle weg gerichtete Zugkraft auf die Bearbeitungselektrode aufbringt. Bei dieser Ausgestaltung kann z.B. auf die Bremsrolle verzichtet werden. Besonders vorteilhaft ist es jedoch, wenn zusätzlich auch eine Bremsrolle vorgesehen ist, insbesondere eine Bremsrolle mit der oben erläuterten Ausgestaltung, d.h. mit zugeordneter Zugdüse. Hier wird die Grundzugkraft über die Spule aufgebaut bzw. über die zugeordneten Antriebsmittel.

Vorteilhaft ist es, wenn die Bearbeitungselektrode wenigstens nahezu einmal die Bremsrolle und/oder die Zugrolle umschlingt und sich mit der Brems- und/oder der Zugrolle aufgrund von Reibungskräften in Wirkeingriff befindet. Der Umschlingungswinkel beträgt vorteilhaft weniger als 360°, insbesondere zwischen 310° und 350°, besonders vorteilhaft 330°. Der Umschlingwinkel kann alternativ auch größer als 360° sein; z.B. kann die Elektrode die entsprechende Rolle mehrmals umschlingen. Dadurch wird unter Einwirkung der fluiddurchströmten Düse eine große Reibwirkung an den Rollen, und damit eine hervorragende Kraftübertragung zum Spannen der Bearbeitungselektrode erreicht, ohne daß es zu einer Beschädigung der Bearbeitungselektrode oder einer Drahtüberschneidung auf den Rollen kommt.

In einer weiteren bevorzugten Ausführungsform sind bei dem Drahtspannsystem zusätzlich Mittel zum Messen der Drahtspannung vorgesehen. Vorteilhaft ist der Erodierdraht um eine bzw. zwei Umlenkrollen geführt. Dabei ist wenigstens eine dieser beiden Umlenkrollen durch Federmittel elastisch nachgiebig befestigt. Die Meßmittel ermitteln über die Position dieser Umlenkrolle, der Federmittel und/oder weiterer Hilfsmittel die jeweils anliegende Erodierdrahtzugpannung. Dies ermöglicht es, daß eine Steuereinrichtung die von der Düse erzeugte Fluidströmung in Abhängigkeit von der von dem Mittel gemessenen Drahtspannung und/oder Sollwerten steuert. Dadurch wird die von der Düse bewirkte Zugkraft auf die Drahtelektrode, und damit auch die Grundzugkraft beeinflußt. Hierdurch kann die beim Arbeitsbereich vorhandene Wirkzugkraft, d.h. die effektive Drahtspannung gesteuert werden. Eine Variation der Grundzugkraft und damit der resultierenden Wirkzugkraft wirkt sich auf die Bearbeitungsqualität negativ aus.

Die Zug- und/oder Bremsrolle sind bevorzugt im wesentlichen als zylindrische Scheibe ausgebildet, wobei vorteilhaft in der Mantelfläche jeweils eine gleichmäßig umlaufende Rille vorgesehen ist und diese Rille sich symmetrisch zur Mantelmitte und in Richtung der Scheibenachse verjüngt. Solche Rollen ermöglichen eine praktisch schwingungsfreie, präzise Erodierdrahtführung und verbessern so die Bearbeitungsqualität am Werkstück. Sie sind zudem in gleicher Weise für Drähte unterschiedlicher Durchmesser geeignet. Auch wird durch eine beispielsweise V-förmige Nut die Reibungskraft zwischen Brems- bzw. Zugrolle und der Bearbeitungselektrode erhöht.

Vorzugsweise ist bei der Zug- und/oder der Bremsrolle ein gewindeartiges Führ- und/oder Rückführmittel vorgesehen zum Führen bzw. Rückführen der Elektrode in die gewünschte axiale Lage. Beispielsweise könnte beim Einfädeln der Elektrode diese etwas von der Mittelachse der entsprechenden Rolle abkommen. Mit Hilfe der Führ- bzw. Rückführmitteln wird die Elektrode zur Mittelachse hin (rück)geführt. Auch wird die Elektrode, falls sie beim Betrieb der Maschine aus der o.g. umlaufenden Rille springt, von dem Gewindemittel wieder dorthin zurückgefördert. Derartige Gewindemittel sind außer bei Zug- und/oder Bremsrollen auch bei beliebigen anderen Rollen der Funkenerosionsvorrichtung einsetzbar. Die Anmelderin behält sich vor, zukünftige Ansprüche auch allgemein auf eine mit Gewindemittel versehene Rolle einer Funkenerosionsvorrichtung, ohne Einschränkung auf eine Zug- bzw. Bremsrolle, zu richten. Vorzugsweise sind bei einer derartigen Rolle zwei Gewinde vorgesehen, die für ein Rückführen in entgegengesetzter axialer Richtung sorgen. Vorteilhaft ist außerdem, eine derartige Rolle zweistückig auszubilden, wobei von den zwei Stücken eine dazwischenliegende Rille gebildet wird zum Führen der Elektrode.

Schließlich sind in einer bevorzugten Ausgestaltung im Fluidströmungskanal, in welchem die Bearbeitungselektrode transportiert bzw. mitgenommen wird, eine oder mehrere Entlastungsbohrungen vorgesehen, durch welche energiearmes Fluid ausströmen kann. Diese Entlastungsbohrungen sind vorteilhaft dort angeordnet, wo das Fluid bereits einen wesentlichen Teil der zunächst verfügbaren kinetischen Energie übertragen hat, z.B. in Nähe vor einer strömungsbeschleunigenden Düse. Dadurch wird verhindert, daß abgebremstes, und damit energiearmes Fluid das nachströmende, energiereichere Fluid zu stark behindert, und der Volumenstrom immer größer wird.

Im folgenden wird die Erfindung anhand von Ausführungsbeispielen und der beiliegenden schematischen Zeichnung näher erläutert. Daraus ergeben sich auch weitere Vorteile und Merkmale der Erfindung.

In der Zeichnung zeigen:

Fig. 1    eine schematische Darstellung einer Funkenerosionsmaschine mit einer Drahtspannvorrichtung gemäß einem ersten Ausführungsbeispiel der vorliegenden Erfindung;

Fig. 2    einen vertikalen Längsschnitt durch eine Bremsvorrichtung der Drahtspannvorrichtung gemäß einem zweiten Ausführungsbeispiel der vorliegenden Erfindung;

Fig. 3    einen vertikalen Längsschnitt durch eine Zugvorrichtung einer Drahtspannvorrichtung gemäß dem zweiten Ausführungsbeispiel der vorliegenden Erfindung;

Fig. 4    eine vergrößerte Schnittansicht der in Fig. 1 und 2 gezeigten Zugdüsen;

Fig. 5    eine schematische Darstellung einer Drahtspannvorrichtung gemäß einem weiteren Ausführungsbeispiel der vorliegenden Erfindung;

Fig. 6    eine schematische Darstellung einer Drahtspannvorrichtung gemäß einem Ausführungsbeispiel der vorliegenden Erfindung, bei welchem die Zugrolle in einer Art Bypass passiert wird;

Fig. 7    eine schematische Ansicht der bei den Funkenerosionsmaschinen verwendeten Zug- und Bremsrollen.

In der nun folgenden Figurenbeschreibung werden für gleiche oder funktionsgleiche Bauteile die gleichen Bezugszeichen verwendet. Des weiteren beziehen sich die verwendeten Begriffe "oben" und "unten" auf die übliche Arbeitsaufstellung einer Drahtfunkenerosionsmaschine, bei der oben Bremsmittel und unten Zugmittel vorhanden sind.

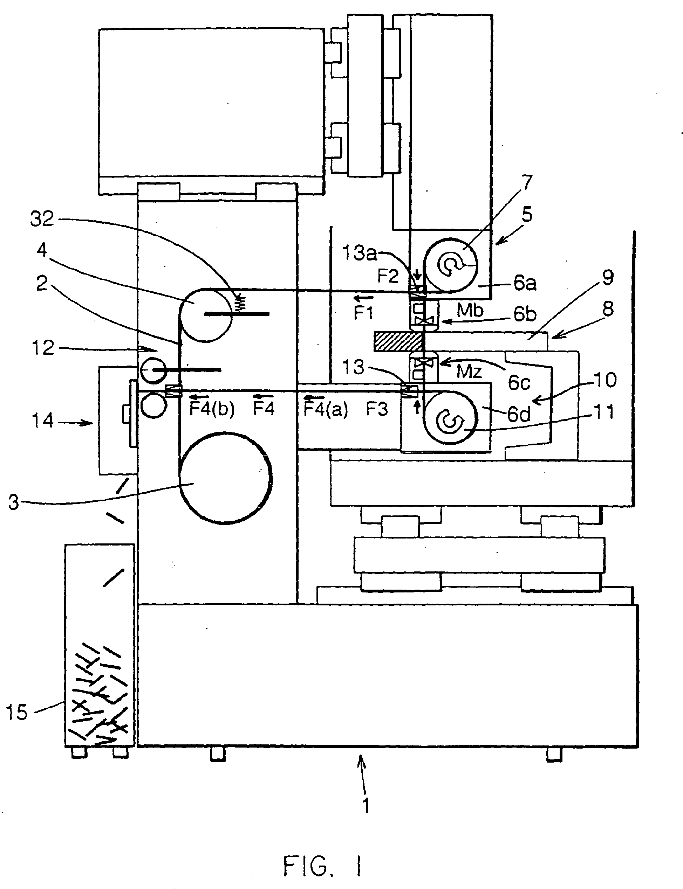

Fig. 1 gibt eine Übersicht über eine Funkenerosionsmaschine 1 mit einer Drahtspannvorrichtung gemäß einem ersten Ausführungsbeispiel der vorliegenden Erfindung. Die Drahtspannvorrichtung gemäß Fig. 1 weist eine - in Drahtlaufrichtung gesehen vor dem Arbeitsbereich der Funkenerosionsmaschine liegende - Bremsvorrichtung 5 sowie eine - in Drahtlaufrichtung gesehen hinter dem Arbeitsbereich der Funkenerosionsmaschine liegende - Zugvorrichtung 10 auf. Der Erodierdraht bzw. die drahtförmige Bearbeitungselektrode 2, welche von der Drahtspannvorrichtung gespannt werden soll, befindet sich zunächst auf einer Vorratsspule 3, wobei die Drahtelektrode 2 in mehreren Lagen über- und nebeneinander um den Kern der Vorratsspule 3 gewikkelt ist. Von der Vorratsspule 3 abgewickelter Erodierdraht 2 verläuft senkrecht nach oben zu einer gegen die Drahtlaufrichtung vorgespannten Tänzerrolle 4. Diese ist über Federmittel 32 an der an der Funkenerosionsmaschine befestigt und dient, wie weiter unten noch genauer erläutert wird, u.a. als Ausgleichselement (Drahtspeicher), sowie als Meßinstrument für die Drahtspannung.

Der Erodierdraht 2 läuft um das linke obere Viertel der Tänzerrolle 4 herum, wird also um 90° nach rechts in die horizontale Richtung zur Bremsvorrichtung 5 hin umgelenkt. Diese ist in einem gehäuseartigen Führungsblock 6a angeordnet und weist eine Bremsrolle 7 auf, die im Führungsblock 6a drehbar gelagert ist und von einem Bremsrollenmotor angetrieben wird. An der Peripherie der Bremsrolle 7 ist eine V-förmige Nut vorgesehen, in der die Drahtelektrode 2 liegt. Der Erodierdraht 2 läuft im Gegenuhrzeigersinn um die Bremsrolle 7 herum, umschlingt also die Bremsrolle 7 mit einem Umschlingwinkel von ca. 270°, so daß der Erodierdraht 2 sich mit der Bremsrolle 7 aufgrund von Reibungskräften in Wirkeingriff befindet. Von der Bremsrolle 7 aus verläuft der Erodierdraht 2 senkrecht nach unten durch einen mit dem Führungsblock 6a gekoppelten oberen Führungskopf 6b hindurch zum eigentlichen Arbeitsbereich 8 mit einem Werkstück 9, und von dort aus weiter durch einen unteren Führungskopf 6c hindurch zu einer Zugvorrichtung 10.

Diese ist ähnlich wie die Bremsvorrichtung 5 in einem gehäuseartigen Führungsblock 6d angeordnet, der mit dem unteren Führungskopf 6c gekoppelt ist, und weist eine in einem Führungsblock 6d eine drehbar gelagerte Zugrolle 11 auf. Die Zugrolle 11 wird von einem Zugrollenmotor angetrieben. An ihrer Peripherie ist eine Nut vorgesehen, in der der Erodierdraht 2 liegt. Dieser verläuft im Gegenuhrzeigersinn um die Zugrolle 11 herum. Der Erodierdraht 2 umschlingt also die Zugrolle 11 mit einem Umschlingwinkel von ca. 270°, so daß sie sich mit der Zugrolle 11 aufgrund von Reibungskräften in Wirkeingriff befindet. Von der Zugrolle 11 aus verläuft der Erodierdraht 2 horizontal nach links in Richtung von zwei gegenläufigen Walzen, die ein Klemmrollenpaar 12 bilden, und von dort aus zu einer Drahtentsorgung. Bei einem alternativen, hier nicht gezeigten Ausführungsbeispiel ist statt dem Klemmrollenpaar lediglich eine Führungsrolle vorgesehen. Im Bereich der Drahtentsorgung ist eine Erodierdrahtschneidevorrichtung 14 angeordnet, die den Erodierdraht 2 zerteilt. Die zerstückelten Erodierdrahtstücke werden in einem Entsorgungsbehälter 15 gesammelt.

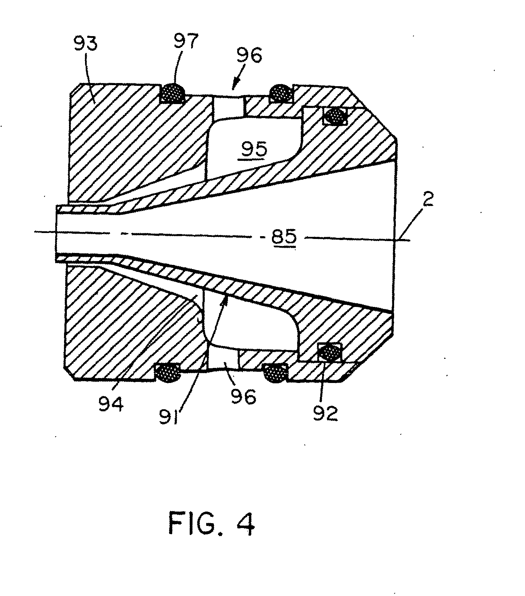

Im Führungsblock 6d ist zudem in Drahtlaufrichtung gesehen hinter der Zugrolle 11 eine Zugdüse 13 vorgesehen. Diese wird in Zusammenhang mit Figur 4 noch genauer beschrieben. Ein Fluid durchströmt die Zugdüse 13 in Drahtlaufrichtung, wonach dasselbe Fluid nach unten ausgestoßen wird. Das Fluid kann z.B. Luft sein, oder z.B. das zur funkenerosiven Bearbeitung als Spül- und Kühlflüssigkeit verwendete Dielektrikum. Durch das Ausstoßen des Fluids wird eine von der Zugrolle 11 weggerichtete Fluidströmung bewirkt. Der Erodierdraht 2 läuft mittig durch die Zugdüse 13 hindurch, und wird aufgrund der Reibung zwischen dem Fluid und der Drahtoberfläche durch die erzeugte Fluidströmung mitgenommen. Mit anderen Worten wird also durch die Zugdüse 13 eine von der Zugrolle 11 weggerichtete Zugkraft F4(a) auf den Erodierdraht 2 ausgeübt, welche den Erodierdraht in einen Reibungseingriff mit der Zugrolle 11 bringt. Die Grundzugkraft wird also ausschließlich von der Düse 13 erzeugt. Alternativ kann die Zugkraft erhöht werden, indem das Klemmrollenpaar 12 mit Hilfe eines zugeordneten Motors angetrieben wird, und somit den Erodierdraht 2 mit einer zusätzlichen Zugkraft F4(b) beaufschlagt. Dann liegt am Erodierdraht 2 in Drahtlaufrichtung gesehen hinter der Zugrolle 11 insgesamt eine Grundzugkraft von F4 = F4(a) + F4(b) an. Das Klemmrollenpaar 12 ist steuerbar, d.h. kann automatisch geöffnet und geschlossen werden. Es kommt zum Einsatz, wenn eine höhere Grundspannung erforderlich ist, die mit den Düsen allein nicht erreicht werden kann. Bei dem o.g. alternativen Ausführungsbeispiel ohne Klemmrollenpaar wird dagegen die Grundzugkraft stets ausschließlich von der Düse 13 erzeugt.

Der Zugrollenmotor treibt die Zugrolle 11 an, und erzeugt dort ein im Gegenuhrzeigersinn gerichtetes Drehmoment Mz. Aufgrund der Reibung zwischen dem Erodierdraht 2 und der Zugrolle 11 ergibt sich somit beim Erodierdraht 2 im Bereich vor der Zugrolle 11 eine Wirkzugkraft F3. Des weiteren wird durch die Tänzerrolle 4 bei einem in Drahtlaufrichtung gesehen vor der Bremsrolle 7 liegenden Bereich eine Zugkraft F1 auf den Erodierdraht 2 ausgeübt, welche von der Bremsrolle 7 weggerichtet ist. Die Grundzugkraft F1 wird durch eine Düse 13a verstärkt, welche gemäß Fig. 1 bei der Bremsvorrichtung 5 in Drahtlaufrichtung gesehen vor der Bremsrolle 7 angeordnet ist. Diese ist ähnlich wie die in Fig. 4 gezeigten Düsen 13, 13' ausgestaltet, und bewirkt eine von der Bremsrolle 7 weggerichtete Kraft auf den Erodierdraht 2, indem diese Düse 13a über ihre Druckfluideinlaßbohrung Fluid ansaugt, und dieses in Richtung einer trichterförmigen Durchgangsöffnung ausstößt, wodurch eine von der Bremsrolle 7 weggerichtete Fluidströmung bewirkt wird. Aufgrund des oben erläuterten Verstärkungseffekts ist auch denkbar, daß die Grundzugkraft F1 allein von der Düse 13a erzeugt wird, d.h. daß auf weitere Spannmittel wie z.B. die Tänzerrolle 4 verzichtet wird.

Der Bremsrollenmotor treibt die Bremsrolle 7 an, und erzeugt dort ein im Uhrzeigersinn gerichtetes Bremsmoment Mb. Aufgrund der Seilreibung zwischen dem Erodierdraht 2 und der Bremsrolle 7 ergibt sich somit beim Erodierdraht 2 im Bereich nach der Bremsrolle 7 eine Wirkzugkraft F2. Die beiden Wirkspannkräfte F2 und F3 sind entgegengesetzt gerichtet, wodurch im Arbeitsbereich 8 der Funkenerosionsmaschine 1 die notwendige Drahtspannung für die Bearbeitung des Werkstücks 9 erzeugt wird. Nähere Details zum Aufbau und zur Einstellung der Drahtspannung folgen später.

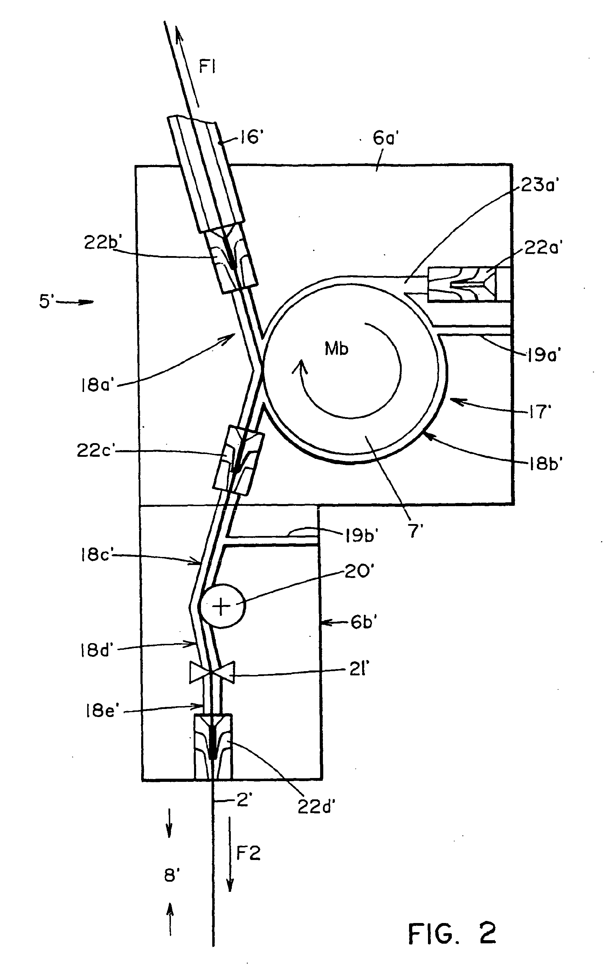

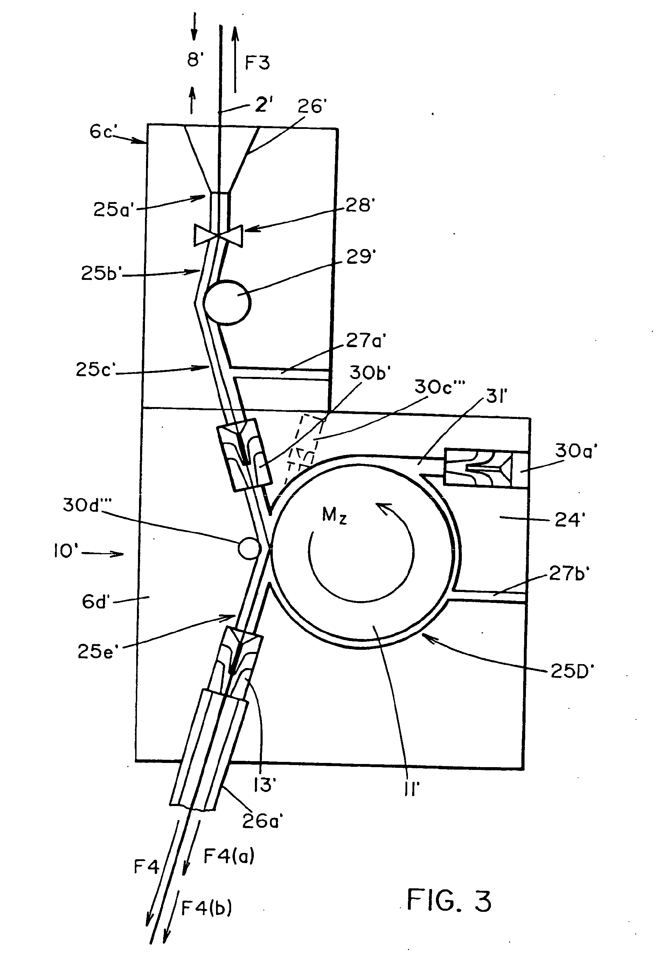

Die in den Fig. 2 und 3 gezeigte Drahtspannvorrichtung gemäß einem zweiten Ausführungsbeispiel der vorliegenden Erfindung weist eine Bremsvorrichtung 5' gemäß Fig. 2, und eine Zugvorrichtung 10' gemäß Fig. 3 auf. Die Drahtspannvorrichtung ist in eine Funkenerosionsmaschine eingebaut, die ähnlich wie die in Fig. 1 gezeigte Funkenerosionsmaschine 1 aufgebaut ist.

Nach Fig. 2 ist die Bremsvorrichtung 5' in einem gehäuseartigen Führungsblock 6a' angeordnet. Ein Erodierdraht 2' wird über ein Führungsrohr 16' in ein Kanalsystem 17' eingeführt, welches in dem Führungsblock 6a' und einem mit diesem gekoppelten Führungskopf 6b' ausgebildet ist. Das Kanalsystem 17' besteht im wesentlichen aus den fünf folgenden, in Drahtlaufrichtung hintereinander angeordneten Kanalabschnitten 18a', 18b', 18c', 18d', 18e': einem ersten, gradlinig verlaufenden Kanalabschnitt 18a', einem zweiten, um eine Bremsrolle 7' herum kreisförmig gekrümmten Kanalabschnitt 18b', und einem dritten, einem vierten und einem fünften Kanalabschnitt 18c', 18d', 18e', die jeweils gradlinig ausgebildet sind, und zickzackförmig verlaufen. Der zweite und der dritte Kanalabschnitt 18b', 18c' sind jeweils mit einer Entlastungsbohrung 19a', 19b' verbunden.

Die Bremsrolle 7' ist im Führungsblock 6a' über Kugellager drehbar gelagert. Sie weist an der Peripherie eine V-förmige Nut auf, in der der Erodierdraht 2' liegt. Diese umschlingt die Bremsrolle 7' mit einem Umschlingwinkel von ca. 330°, so daß der Erodierdraht 2' sich mit der Bremsrolle 7' aufgrund von Reibungskräften in Wirkeingriff befindet. Zwischen dem dritten und dem vierten Kanalabschnitt 18c', 18d' ist eine obere Stromzuführung 20' angeordnet, und zwischen dem vierten und fünften Kanalabschnitt ist eine obere Drahtführung 21' angeordnet. Durch die beschriebene Anordnung wird gewährleistet, daß der Erodierdraht 2' stets an der selben Stelle die Bremsrolle 7' verläßt, wodurch der o.g. Umschlingwinkel von 330° eingestellt wird.

Des weiteren ist eine Düse 22a' vorgesehen, die über eine Bohrung 23a' mit dem zweiten, kreisförmig um die Bremsrolle 7' herumgeführten Kanalabschnitt 18b' in Verbindung steht. Zusätzliche Düsen 22b', 22c', 22d' sind außerdem im Bereich des ersten, des dritten und fünften Kanalabschnitts 18a', 18c', 18e' angeordnet. Sämtliche Düsen 22a', 22b', 22c', 22d', die nach Art von Staffeldüsen angeordnet sind, und deren Funktion Transport und Umlenkung des Erodierdrahts beim Einfädeln ist, sind bevorzugt entsprechend einer in Fig. 4 gezeigten Zugdüse 13, 13' ausgestaltet. Des weiteren kann im Bereich des ersten Kanalabschnitts 18a', so wie in Fig. 1, eine Zugdüse 13a angeordnet sein.

Gemäß Fig. 3 ist die Zugvorrichtung 10' in einem gehäuseartigen Führungsblock 6d' angeordnet. Durch diesen und durch einen mit dem Führungsblock 6d' gekoppelten Führungskopf 6c' hindurch ist ein Erodierdrahtführungskanal 24' ausgebildet. Dieser besteht im wesentlichen aus den fünf folgenden, in Drahtlaufrichtung hintereinander angeordneten Kanalabschnitten 25a', 25b', 25c', 25d', 25e': einem ersten Kanalabschnitt 25a', der einen Einlauftrichter 26' aufweist, welcher in einen im wesentlichen gradlinig verlaufenden Bereich mündet, einem zweiten und dritten Kanalabschnitt 25b', 25c', die jeweils gradlinig verlaufen, einem vierten, um eine Zugrolle 11' herum kreisförmig gekrümmten Kanalabschnitt 25d', und einem fünften, im wesentlichen gradlinig verlaufenden Kanalabschnitt 25e', der in ein Führungsrohr 26a' mündet. Dabei sind der erste, der zweite und der dritte Kanalabschnitt 25a', 25b', 25c' derart ausgebildet, daß die Drahtelektrode 2' sicher auf einer Stromzuführung 29' aufliegt.

Die Zugrolle 11' ist im Führungsblock 6d' drehbar gelagert. Sie weist an der Peripherie eine V-förmige Nut auf, in der die Drahtelektrode 2' liegt. Diese umschlingt die Zugrolle 11' mit einem Umschlingwinkel von ca. 330°, so daß der Erodierdraht 2' mit der Zugrolle 11' aufgrund von Reibungskräften in Wirkeingriff steht. Des weiteren ist zwischen dem ersten und dem zweiten Kanalabschnitt 25a', 25b' eine untere Drahtführung 28', und zwischen dem zweiten und dritten Kanalabschnitt 25b', 25c' eine untere Stromzuführung 29' angeordnet. Durch die beschriebene Anordnung wird gewährleistet, daß der Erodierdraht 2' stets an einer vorbestimmten Stelle die Zugrolle 11' berührt, wodurch der o.g. Umschlingwinkel von 330° eingestellt wird. Die Drahtführungen 21', 28' sorgen für die genaue Führung der Drahtelektrode gegenüber dem Werkstück.

Bei der Zugvorrichtung 10' sind an verschiedenen Abschnitten des Transportsystems mehrere Düsen nach Art von Staffeldüsen angeordnet. Eine erste Düse 30a' steht über eine Bohrung 31' mit dem vierten, kreisförmig um die Zugrolle 11' herumgeführten Kanalabschnitt 25d' in Verbindung. Eine zusätzliche Düse 30b' ist im Bereich des dritten Kanalabschnitts 25c' vorgesehen. Des weiteren ist beim fünften Kanalabschnitt eine Zugdüse 13' angeordnet, die vergleichbar mit der Zugdüse 13 in Fig. 1 ist und im Zusammenhang mit Fig. 4 näher erläutert wird. Die übrigen Düsen 30a', 30b' sind Transport- bzw. Umlenkdüsen im Einfädelmodus.

Gemäß Fig. 4 sind die in den Fig. 1 und 3 gezeigten Zugdüsen 13, 13' bevorzugt jeweils als Zweikammerinjektordüse mit zwei im wesentlichen koaxial zueinander angeordneten Düsenkammern 85 und 95 ausgestaltet. Dabei bildet ein vorderer Auslauftrichter 85 die innere Düsenkammer, deren Außenwandung 91 sich ebenfalls trichterförmig nach vorne hin verjüngt. Der so ausgebildete Trichter ist in einen Hohlzylinder 93 mit ebenfalls trichterförmiger Durchgangsöffnung 94 eingefügt und gegen ihn mit Dichtungen 92 abgedichtet. Die Außenwand des Auslauftrichters 85 und die Innenwand der trichterförmigen Durchgangsöffnung 94 begrenzen gemeinsam die äußere Düsenkammer 95. Diese ist über eine Druckfluideinlaßbohrung 96 mit einem Druckfluideinlaßkanal des jeweiligen Führungsblocks 6d, 6d' verbunden, und hierüber an eine Druckfluidversorgung anschließbar.

Der entsprechende Erodierdraht 2, 2' verläuft im wesentlichen auf der Mittelachse der Düse 13, 13' liegend durch die innere Düsenkammer 85 hindurch. Diese steht aus der äußeren Düsenkammer 95 in Drahtlaufrichtung ein bißchen hervor. Dichtungsringe 97 sorgen für eine leckfreie Lagerung der Zugdüse 13, 13' in der entsprechenden Ausnehmung des Führungsblocks 6d, 6d'.

Die in den Fig. 1 bzw. 2 und 3 gezeigten Spannvorrichtungen arbeiten wie folgt: In einem automatischen Einfädelmodus der Funkenerosionsmaschine 1 wird der Erodierdraht 2, 2' durch die vorliegende Drahtspannvorrichtung transportiert, indem die entsprechenden mit einem Fluid durchströmten Düsen 22a', 22b', 22c', 30a', 30b', 13', 13 im Bereich des Kanalsystems 17' bzw. des Führungskanals 24' einen Strömungsvorschub erzeugen. Hierdurch wird der Erodierdraht 2, 2' zusammen mit dem Fluid, welches durch das Kanalsystem 17' bzw. den Führungskanal 24' strömt, eingesaugt bzw. mitgenommen. Dieser wird hierdurch durch das Kanalsystem 17' bzw. den Führungskanal 24' transportiert. Als Fluid dient die Arbeitsflüssigkeit, also das beim funkenerosiven Schneiden regelmäßig verwendete Dielektrikum, z.B. Wasser mit geringer Leitfähigkeit. Über die Entlastungsbohrungen 19a', 19b', 27a', 27b' kann ein Teil des angesaugten Fluids wieder ausströmen. Da die Entlastungsbohrungen 19a', 19b', 27a', 27b' dort angeordnet sind, wo das Fluid bereits einen wesentlichen Teil der zunächst verfügbaren kinetischen Energie übertragen hat, - also etwa beim dritten Kanalabschnitt 25c' kurz vor der Düse 30b', oder bei den gekrümmten Kanalabschnitten 25d', 18b' in Fluidstromrichtung gesehen unmittelbar vor der Düse 30a', 22a' - wird verhindert, daß energiearmes Fluid das nachströmende, energiereichere Fluid zu stark abbremst.

Im Arbeitsmodus der Funkenerosionsmaschine wird die Drahtspannung aufgebaut und eingestellt. Diese soll - insbesondere im Arbeitsbereich 8, 8' beim Werkstück 9 - zu jeder Zeit möglichst exakt eine gewünschte Größe aufweisen. Im vorliegenden Fall erfolgt die Einstellung der gewünschten Drahtspannung über die Zugdüse 13, 13', die Tänzerrolle 4, sowie drei Motoren, nämlich den das Klemmrollenpaar 12 antreibenden Spulenmotor, den die Bremsrolle 7, 7' antreibenden Bremsrollenmotor, und den die Zugrolle 11, 11' antreibenden Zugrollenmotor.

Dabei sorgt jede Zugdüse 13, 13' für eine gewisse Grundspannung des - bereits eingefädelten - Erodierdrahtes 2, 2' im Bereich zwischen jeder Düse und der Zugrolle 11, 11', indem sie gemäß Fig. 4 über die Druckfluideinlaßbohrungen 96 Fluid ansaugt, und dieses in Richtung der trichterförmigen Durchgangsöffnung 94 ausstößt. Das angesaugte Fluid kann wie oben erläutert Luft sein, oder z.B. das zur Funkenerosion verwendete Dielektrikum. Dadurch wird in Drahtlaufrichtung gesehen hinter der Zugvorrichtung 10, 10', insbesondere im Bereich des fünften Kanalabschnitts 25e' und des Führungsrohrs 26a' eine von der Zugrolle 11, 11' weg gerichtete Fluidströmung bewirkt, wodurch eine Mitnahme des Erodierdrahts 2, 2' erreicht wird. Mit anderen Worten wird also der Erodierdraht 2, 2' von jeder Zugdüse 13, 13' durch die von ihr erzeugte Unterdruckströmung mitgenommen und hierdurch gespannt. Daher wird eine von der Zugrolle 11, 11' weggerichtete Zugkraft F4 (a) auf den Erodierdraht 2, 2' ausgeübt. Die so erzeugte Grundspannung im Bereich (in Drahtlaufrichtung gesehen) hinter der Zugrolle 11, 11' kann alternativ bei Verwendung von dickeren Erodierdrähten erhöht werden, indem durch Antrieb des dem Klemmrollenpaar 12 zugeordneten Spulenmotors eine zusätzliche, ebenfalls von der Zugrolle 11, 11' weggerichtete Zugkraft F4(b) auf die Drahtelektrode 2, 2' ausgeübt wird. Dann liegt dort insgesamt eine Grundzugkraft von F4 = F4(a) + F4(b) an.

Wie oben erwähnt, umschlingt der Erodierdraht 2, 2' die Zugrolle 11, 11' und wird aufgrund der anliegenden Grundzugkraft F4 mit ihr wegen der Seilreibungskräfte in Wirkeingriff gebracht. Die von der Zugdüse 13, 13' und alternativ dem Klemmrollenpaar 12 auf den Erodierdraht 2, 2' aufgebrachte Grundzugkraft F4 wird also entsprechend der Seilreibungsformel verstärkt, wonach gilt:

$$F3 = F4 \times e^{\alpha\mu}.$$

Hierbei ist F3 die resultierende Wirkzugkraft, $\alpha$ der Umschlingwinkel, und $\mu$ der Reibungskoeffizient. Die sich in Drahtlaufrichtung gesehen vor der Zugrolle 11, 11', d.h. insbesondere beim Arbeitsbereich 8, 8' mit dem Werkstück 9 ergebende Wirkzugkraft F3 ist somit insbesondere aufgrund des relativ großen Umschlingwinkels von 330° wesentlich größer als die Grundzugkraft F4.

Um die sog. Gleichgewichtsbedingung zu erfüllen, wonach gilt:

$$Mz = (F4-F3) \times R,$$

wobei R der Radius der Zugrolle 11 ist, wird durch Betrieb des Zugrollenmotors ein Drehmoment Mz im Gegenuhrzeigersinn auf die Zugrolle 11, 11' aufgebracht.

Mit Hilfe der Bremsrolle 7, 7' wird eine der Wirkzugkraft F3 engegengerichtete Kraft F2 erzeugt, und damit der Erodierdraht wie gewünscht im Arbeitsbereich 8, 8' der Maschine gespannt. Zu diesem Zweck wird die Bremsrolle 7, 7' vom zugehörigen Bremsrollenmotor mit einer geeigneten Geschwindigkeit angetrieben, wobei ein Drehmoment Mb im Uhrzeigersinn auf die Bremsrolle 7, 7' aufgebracht wird. Die Wechselwirkung zwischen der Bremsrolle 7, 7' und dem Erodierdraht 2, 2' beruht wiederum auf Seilreibung. Hierzu liegt - in Drahtlaufrichtung gesehen im Bereich vor der Bremsrolle 7, 7' - eine Grundzugkraft F1 am Erodierdraht 2, 2' an. Die Grundzugkraft F1 ist deutlich geringer als die gewünschte Wirkzugkraft F2.

Eine Komponenete der Grundspannung wird dadurch erzeugt, daß in einem Bereich, welcher in Drahtlaufrichtung gesehen vor der Bremsrolle 7, 7' liegt, die Tänzerrolle 4 wie erläutert über die Federmittel 32 an der Funkenerosionsmaschine 1 befestigt ist. Die Tänzerrolle 4 dient außerdem als Ausgleichselement (Drahtspeicher). Die Grundzugkraft F1 wird durch die Düse 13a verstärkt, welche gemäß Fig. 1 bei der Bremsvorrichtung 5 in Drahtlaufrichtung gesehen vor der Bremsrolle 7 angeordnet ist (bzw. bei der Bremsrolle 5' gem. Fig. 2 im Bereich des ersten Kanalabschnitts 18a' (dort nicht dargestellt)). Diese bewirkt wie oben erläutert eine von der Bremsrolle 7, 7' weggerichtete Kraft auf den Erodierdraht 2, 2'. Aufgrund des oben erläuterten Verstärkungseffekts ist auch denkbar, daß die Grundzugkraft F1 allein von der Düse 13a erzeugt wird, d.h. daß auf weitere Spannmittel wie z.B. die Tänzerrolle 4 verzichtet wird. Im Bereich zwischen dieser Düse 13a und der Vorratsspule 3 hängt der Draht dann praktisch spannungsfrei (Drahtspeicher). In diesem Fall mißt eine Meßeinrichtung die Bauchung des Drahts, womit der Drahtspulenmotor geregelt wird. Diese Lösung kommt insbesondere dann zum Einsatz, wenn sehr kleine Wirkspannungen benötigt werden.

Änderungen bei der Drahtspannung werden z.B. wie folgt ausgeglichen: Wie erläutert ist die in Drahtlaufrichtung gesehen vor der Bremsrolle 7, 7' liegende Tänzerrolle 4 über die Federmittel 32 an der Funkenerosionsmaschine 1 befestigt. Infolgedessen besteht ein Zusammenhang zwischen der räumlichen Lage der Tänzerrolle 4 und der beim Erodierdraht 2, 2' anliegenden Grundzugkraft F1. Verwendet man daher beispielsweise einen Sensor, um laufend die jeweils aktuelle Position der Tänzerrolle 4 festzustellen, kann daraus die jeweils anliegende Grundzugkraft F1 ermittelt werden. Unter Berücksichtigung von zusätzlichen Größen - etwa dem vom Bremsrollenmotor aufgebrachten Drehmoment Mb, des Bremsrollenradius R, etc. - kann somit von einer zentralen Steuerung (nicht dargestellt) die beim Arbeitsbereich 8, 8' vorhandene Wirkspannung ermittelt werden. Weicht deren Wert vom gewünschten Wert ab, kann die Steuerung durch Ansteuerung z.B. des Bremsrollenmotors und/oder des Zugrollenmotors und/oder der Zugdüse 13, 13' und/oder des Klemmrollenmotors die Wirkspannung entsprechend korrigieren, und damit im wesentlichen konstant halten.

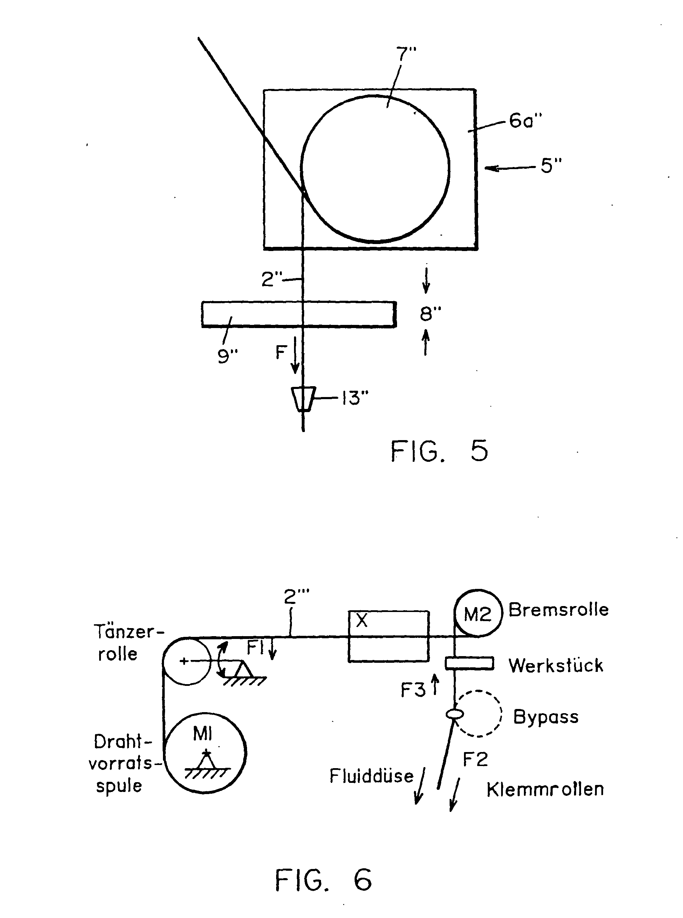

Bei einem weiteren, in Fig. 5 gezeigten Ausführungsbeispiel ist der Bereich der Zugvorrichtung so ausgestaltet, daß das Gehäuse ohne Umschlingen der Zugrolle in einer Art Bypass passiert werden kann. Somit kann die Wirkspannung je nach Bedarf (Drahtsorte, Wirkkraft) auf unterschiedliche Art eingestellt werden. Diese Lösung kommt insbesondere zum Einsatz, wenn sehr kleine Wirkkräfte benötigt werden. In diesem Fall ist die Fluiddüse und/oder das Klemmrollenpaar direkt für die Wirkkraft verantwortlich. Unter Umständen ist eine Serie von Düsen erforderlich, um die gewünschte Drahtspannung zu erreichen (Staffeldüse). Die Fluiddüse ist ähnlich wie die in Fig. 4 gezeigte Düse aufgebaut. Sie saugt über ihre Druckfluideinlaßbohrung Fluid an, und stößt dieses in Richtung einer trichterförmigen Durchgangsöffnung aus. Dadurch wird wieder bezogen auf Fig. 5 eine von der Bremsrolle weggerichtete Fluidströmung bewirkt, die den Elektrodendraht 2''' mitnimmt, so daß dieser im Arbeitsbereich beim Werkstück gespannt wird. Diese Anordnung kommt insbesondere dann zum Einsatz, wenn sehr kleine Wirkkräfte benötigt werden. Die Zugvorrichtung weist dabei wie in Fig. 3 gestrichelt dargestellt eine zusätzliche Düse 30c''', und eine zusätzliche Umlenkrolle 30d''' auf. Die Düse 30c''' erzeugt beim Einfädeln des Elektrodendrahts 2''' einen Fluidstrom, mit welchem er links an der Rolle 11' vorbeigeführt wird. Der Draht 2''' gelangt also vom dritten Kanalabschnitt 25c' über die Umlenkrolle 30d''' direkt zum fünften Kanalabschnitt 25e'.

Fig. 5 zeigt eine schematische Darstellung einer Drahtspannvorrichtung gemäß einem weiteren Ausführungsbeispiel der vorliegenden Erfindung, welche bevorzugt für dünne Erodierdrähte geeignet ist. Diese weist lediglich eine Bremsvorrichtung 5'', jedoch keine Zugvorrichtung auf. Dabei ist die Bremsvorrichtung 5'' entsprechend der in der Fig. 3 gezeigten Bremsvorrichtung 5' ausgestaltet, und in eine Funkenerosionsmaschine eingebaut, die im wesentlichen der in der Fig. 1 gezeigten Maschine 1 entspricht. Jedoch ist statt einer Zugvorrichtung lediglich eine Spanndüse 13'' vorgesehen, und zwar bei einem Bereich, der in Drahtlaufrichtung gesehen hinter einem Arbeitsbereich 8'' mit einem Werkstück 9'' liegt. Unter Umständen ist eine Serie von Düsen erforderlich, um die gewünschte Drahtspannung zu erreichen (Staffeldüse). Die Spanndüse 13'' ist wie die in Fig. 4 gezeigte Düse aufgebaut, und erzeugt bei einer Drahtelektrode 2'' eine Kraft F, die von einer in einem gehäuseartigen Führungsblock 6a'' gelagerten Bremsrolle 7'' weggerichtet ist. Dies wird erreicht, indem die Düse 13'' über ihre Druckfluideinlaßbohrung Fluid ansaugt, und dieses in Richtung einer trichterförmigen Durchgangsöffnung ausstößt. Dadurch wird eine von der Bremsrolle 7'' weggerichtete Fluidströmung bewirkt, die den Elektrodendraht 2'' mitnimmt, so daß dieser im Arbeitsbereich 8'' beim Werkstück 9'' gespannt wird. Diese Anordnung kommt insbesondere dann zum Einsatz, wenn sehr kleine Wirkkräfte benötigt werden.

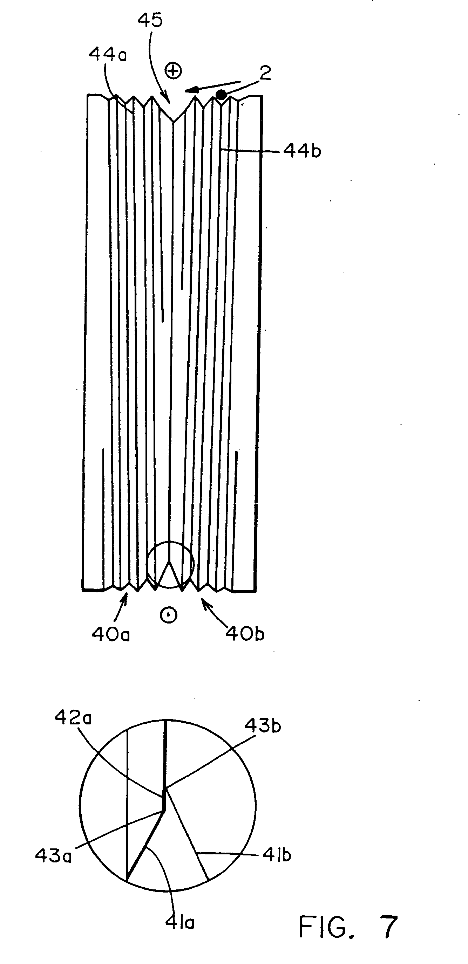

Fig. 7 zeigt eine schematische Ansicht einer bei den oben beschriebenen Funkenerosionsmaschinen verwendeten Zug- bzw. Bremsrolle. Diese ist zweistückig ausgebildet, und besteht aus zwei koaxial miteinander verbundenen, im wesentlichen zylindrischen Scheiben 40a, 40b. Die linke Scheibe 40a ist an ihrem rechten Ende, und die rechte Scheibe 40b an ihrem linken Ende konusartig abgeschrägt, sodaß sich zwischen den Scheiben 40a, 40b eine im wesentlichen V-förmige Führungsrille 45 ergibt. Dabei liegt die Innenkante 43b der Abschrägung 41b der rechten Scheibe 40b näher an der Mittelachse der Rolle als die Innenkante 43a der Abschrägung 41a der linken Scheibe 40a. Relativ dicke Drähte werden somit zwischen den beiden Abschrägungen 41a und 41b geführt, und relativ dünne Drähte zwischen der Abschrägung 41b und der rechten Seitenwand 42a der linken Scheibe 40a. Zusätzlich sind beide Scheiben 40a, 40b außenumfänglich mit einem Gewinde 44a, 44b versehen. Die beiden Gewinde 44a, 44b sind gegenläufig orientiert. Springt etwa die Elektrode 2 aus der o.g. Führungsrille 45 zwischen den Abschrägungen 41a und 41b bzw. zwischen der Abschrägung 41b und der Seitenwand 42a, wird sie von dem jeweiligen Gewinde 44a, 44b wieder dorthin zurückgefördert.

**Patentansprüche**

1. Drahtspannsystem für eine drahtförmige Bearbeitungselektrode (2, 2') einer Funkenerosionsvorrichtung (1), bei welchem die Bearbeitungselektrode (2, 2') eine im Drahtzufuhrbereich angeordnete Bremsrolle (7, 7') und/oder eine im Drahtabfuhrbereich angeordnete Zugrolle (11, 11') zumindest teilweise umschlingt, **dadurch gekennzeichnet, daß** eine in Drahtlaufrichtung vor der Bremsrolle und/oder in Drahtlaufrichtung hinter der Zugrolle angeordnete und der Bremsrolle bzw. der Zugrolle zugeordnete fluiddurchströmte Düse (13, 13', 13a) vorgesehen ist, durch welche die Bearbeitungselektrode (2, 2') geführt wird und welche eine von der Brems- und/oder Zugrolle weg gerichtete Grundzugkraft auf die Bearbeitungselektrode (2, 2') ausübt, um eine Wirkspannung im Arbeitsbereich durch Bewirken eines reibungsbedingten Wirkeingriffes zwischen der Bearbeitungselektrode (2, 2') und der Brems- und/oder Zugrolle zu erzeugen.

2. Drahtspannsystem nach Anspruch 1, bei welchem die Düse (13, 13', 13a) als Venturi-Düse ausgestaltet ist, und eine Fluidflüssigkeitsströmung bewirkt, durch welche die Grundzugkraft auf die Bearbeitungselektrode (2, 2') ausgeübt wird.

3. Drahtspannsystem nach Anspruch 1 oder 2, bei welchem die Düse (13, 13'13a) eine Injektordüse ist und die Bearbeitungselektrode (2, 2') durch eine Düsenkammer (85) der Injektordüse hindurchgeführt ist.

4. Drahtspannsystem nach einem der Ansprüche 1 bis 3, bei welchem der Bereich der Zugrolle (11, 11') mit einer Art Bypass so ausgestaltet ist, daß die Bearbeitungselektrode (2''') die Zugrolle ohne Umschlingen passieren kann.

5. Drahtspannsystem nach einem der vorhergehenden Ansprüche, bei welchem ein Mittel vorgesehen ist, welches die Zugrolle (11, 11') mit einem Drehmoment beaufschlagt.

6. Drahtspannsystem nach Anspruch 5, bei welchem das Mittel ein Zugrollennmotor ist, der die Zugrolle (11, 11') antreibt.

7. Drahtspannsystem nach einem der vorhergehenden Ansprüche, bei welchem zusätzlich ein Mittel vorgesehen ist, welches die Bremsrolle (7, 7') mit einem Drehmoment beaufschlagt.

8. Drahtspannsystem nach Anspruch 7, bei welchem das zusätzliche Mittel ein Bremsrollenmotor ist, der die Bremsrolle (7, 7') bremst.

9. Drahtspannsystem nach einem der vorhergehenden Ansprüche, bei welchem die eingefädelte Bearbeitungselektrode (2, 2') die Bremsrolle (7, 7') wenigstens nahezu einmal umschlingt und sich mit der Bremsrolle (7, 7') aufgrund von Reibungskräften in Wirkeingriff befindet.

10. Drahtspannsystem nach einem der vorhergehenden Ansprüche, bei welchem die eingefädelte Bearbeitungselektrode (2, 2') die Zugrolle (11, 11') wenigstens nahezu einmal umschlingt und sich mit der Zugrolle (11, 11') aufgrund von Reibungskräften in Wirkeingriff befindet.

11. Drahtspannsystem nach einem der vorhergehenden Ansprüche, bei welchem Mittel vorgesehen sind zum Messen der Drahtspannung.

12. Drahtspannsystem nach Anspruch 11, bei welchem eine Umlenkrolle (4) vorgesehen ist, welche über Federmittel (32) an der Funkenerosionsmaschine (1) befestigt ist, und die Meßmittel über die Position dieser Umlenkrolle (4), der Federmittel (32) und/oder weiterer Hilfsmittel die jeweils anliegende Drahtspannung ermitteln.

13. Drahtspannsystem nach Anspruch 11 oder 12, bei welchem eine Steuereinrichtung vorgesehen ist, welche eine von der Düse (13, 13', 13a) erzeugte Fluidströmung in Abhängigkeit von der von dem Mittel gemessenen Drahtspannung und/oder Sollwerten steuert.

14. Drahtspannsystem nach einem der vorhergehenden Ansprüche, bei welchem Entlastungsbohrungen (19a', 19b', 27a', 27b') vorgesehen sind, durch welche energiearmes Fluid ausströmen kann.

**15.** Drahtspannsystem nach einem der vorstehenden Ansprüche, bei welchem die Zug- und/oder die Bremsrolle (11, 11'; 7, 7') als zylindrische Scheibe ausgebildet sind, wobei in der Mantelfläche jeweils eine gleichmäßig umlaufende Rille vorgesehen ist und diese Rille sich symmetrisch zur Mantelmitte und in Richtung der Scheibenachse verjüngt.

**16.** Drahtspannsystem nach einem der vorstehenden Ansprüche, bei welchem an der Zug- und/oder der Bremsrolle ein gewindeartiges Rückführmittel zum Führen und/oder Rückführen der Elektrode in die gewünschte axiale Lage vorgesehen ist.

**17.** Drahtspannsystem nach einem der vorstehenden Ansprüche, bei welchem die Zug- und/oder die Bremsrolle zweistückig ausgebildet sind, wobei von den zwei Stücken eine dazwischenliegende Rille zum Führen der Elektrode gebildet wird.

**18.** Verfahren zum Spannen einer drahtförmigen Bearbeitungselektrode (2, 2') einer Funkenerosionsvorrichtung (1), bei welchem die Bearbeitungselektrode (2, 2') eine im Drahtzufuhrbereich angeordnete Bremsrolle (7, 7') und/oder eine im Drahtabfuhrbereich angeordnete Zugrolle (11, 11') zumindest teilweise umschlingt, **dadurch gekennzeichnet, daß** in Drahtlaufrichtung vor der Bremsrolle und/oder in Draht laufrichtung hinter der Zugrolle eine der Bremsrolle bzw. der Zugrolle zugeordnete fluiddurchströmte Düse (13, 13', 13a) angeordnet ist, durch welche die Bearbeitungselektrode (2, 2') geführt wird, und bei welchem die fluiddurchströmte Düse (13, 13', 13a) eine von der Brems- und/oder Zugrolle weg gerichtete Grundzugkraft auf die Bearbeitungselektrode (2, 2') ausübt, um eine Wirkspannung im Arbeitsbereich durch Bewirken eines reibungsbedingten Wirkeingriffes der Bearbeitungselektrode (2, 2') und der Brems- und/oder Zugrolle zu erzeugen.

**Claims**

**1.** Wire tensioning system for a wire-shaped working electrode (2, 2') of a spark erosion device (1), in which the working electrode (2, 2') at least partially encompasses a braking roller (7, 7') arranged in the wire entry area and/or a tensioning roller (11, 11') arranged in the wire outlet area, **characterised in that** there is provided a nozzle (13, 13', 13a) through which fluid flows and which is arranged in front of the braking roller in the wire running direction and/or behind the tensioning roller in the wire running direction and which is assigned to the braking roller or the tensioning roller, and through which the working electrode (2, 2') is led and which exerts a basic tensile force, directed away from the braking and/or tensioning roller, on the working electrode (2, 2'), in order to produce an effective tension in the working area by effecting a friction-related effective engagement between the working electrode (2, 2') and the braking roller and/or tensioning roller.

**2.** Wire tensioning system according to claim 1, in which the nozzle (13, 13', 13a) is designed as a Venturi tube, and effects a fluid flow through which the basic tensile force is exerted on the working electrode (2, 2').

**3.** Wire tensioning system according to claim 1 or 2, in which the nozzle (13, 13', 13a) is an injector nozzle and the working electrode (2, 2') is led through a nozzle chamber (85) of the injector nozzle.

**4.** Wire tensioning system according to one of the claims 1 to 3, in which the area of the tensioning roller (11, 11') is designed with a type of bypass in such a way that the working electrode (2''') can pass the tensioning roller without wrapping around.

**5.** Wire tensioning system according to one of the preceding claims, in which a means is provided that subjects the tensioning roller (11, 11') to a torque.

**6.** Wire tensioning system according to claim 5, in which this means is a tensioning roller motor which drives the tensioning roller (11, 11').

**7.** Wire tensioning system according to one of the preceding claims, in which additionally a means is provided that subjects the braking roller (7, 7') to torque.

**8.** Wire tensioning system according to claim 7, in which this additional means is a braking roller motor which brakes the braking roller (7, 7').

**9.** Wire tensioning system according to one of the preceding claims, in which the threaded-up working electrode (2, 2') is wrapped around the braking roller (7, 7') at least almost once, and finds itself in effective engagement with the braking roller (7, 7') on account of frictional forces.

**10.** Wire tensioning system according to one of the preceding claims, in which the threaded-up working electrode (2, 2') is wrapped around the tensioning roller (11, 11') at least almost once, and finds itself in effective engagement with the tensioning roller (11, 11') on account of frictional forces.

**11.** Wire tensioning system according to one of the preceding claims, in which means are provided for measuring the tension of the wire.

**12.** Wire tensioning system according to claim 11, in which a deflection roller (4) is provided, which is fastened to the spark erosion machine (1) via spring elements (32), and the measuring means measure the respective wire tension via the position of this deflection roller (4), the spring elements (32) and/or other aids.

**13.** Wire tensioning system according to claim 11 or 12, in which a control device is provided which controls a fluid flow produced by the nozzle (13, 13', 13a) depending on the wire tension measured by the measuring means and/or reference values.

**14.** Wire tensioning system according to one of the preceding claims, in which relief bores (19a', 19b', 27a', 27b') are provided, through which energy-poor fluid can flow out.

**15.** Wire tensioning system according to one of the preceding claims, in which the tensioning roller and/or the braking roller (11, 11'; 7, 7') are designed as a cylindrical disk, wherein provided in the casing surface is a groove running evenly all round, and this groove tapers symmetrically towards the casing centre and in the direction of the disk axis.

**16.** Wire tensioning system according to one of the preceding claims, in which provided on the tensioning roller and/or braking roller is a thread-like return means for guiding and/or returning the electrode into the desired axial position.

**17.** Wire tensioning system according to one of the preceding claims, in which the tensioning roller and/or braking roller are designed in two parts, wherein the two parts form a groove between them to guide the electrode.

**18.** Method for tensioning a wire-shaped working electrode (2, 2') of a spark erosion device (1), in which the working electrode (2, 2') at least partially encompasses a braking roller (7, 7') arranged in the wire entry area and/or a tensioning roller (11, 11') arranged in the wire outlet area, **characterised in that** provided in front of the braking roller in the wire running direction and/or behind the tensioning roller in the wire running direction, there is a nozzle (13, 13', 13a) which is assigned to the braking roller or the tensioning roller, and through which fluid flows, and through which the processing electrode (2, 2') is led, and in which the nozzle (13, 13', 13a) through which fluid flows exerts a basic tensile force, directed away from the braking and/or tensioning roller, on the working electrode (2, 2'), in order to produce an effective tension in the working area by effecting a friction-related effective engagement between the working electrode (2, 2') and the braking roller and/or tensioning roller.

**Revendications**

**1.** Système tendeur de fil métallique pour une électrode de traitement filiforme (2, 2') d'un dispositif d'électroérosion (1), dans lequel l'électrode de traitement (2, 2') enlace au moins en partie un rouleau de freinage (7, 7') disposé dans la zone d'amenée de fil métallique et/ou un rouleau d'étirage (11, 11') disposé dans la zone d'évacuation de fil métallique, **caractérisé en ce qu'**il est prévu une tuyère (13, 13', 13a), traversée par un fluide, disposée dans le sens de marche du fil métallique avant le rouleau de freinage et/ou dans le sens de marche du fil métallique après le rouleau d'étirage, et attribuée au rouleau de freinage ou au rouleau d'étirage, l'électrode de traitement (2, 2') étant guidée à travers ladite tuyère, et ladite tuyère exerçant sur l'électrode de traitement (2, 2') une force de traction de base s'éloignant du rouleau de freinage et/ou d'étirage afin de générer une tension active dans la zone de travail en provoquant un engagement actif, dû au frottement, entre l'électrode de traitement (2, 2') et le rouleau de freinage et/ou d'étirage.

**2.** Système tendeur de fil métallique selon la revendication 1, dans lequel la tuyère (13, 13', 13a) est configurée comme un tube de Venturi et provoque un écoulement de liquide fluidique qui exerce la force de traction de base sur l'électrode de traitement (2, 2').

**3.** Système tendeur de fil métallique selon la revendication 1 ou 2, dans lequel la tuyère (13, 13', 13a) est une tuyère d'injection et l'électrode de traitement (2, 2') est amenée à traverser une chambre de tuyère (85) de la tuyère d'injection.

**4.** Système tendeur de fil métallique selon l'une quelconque des revendications 1 à 3, dans lequel la zone du rouleau d'étirage (11, 11') est configurée avec une sorte de dérivation de telle sorte que l'électrode de traitement (2''') peut passer le rouleau d'étirage sans l'enlacer.

**5.** Système tendeur de fil métallique selon l'une quelconque des revendications précédentes, dans lequel des moyens sont prévus qui sollicitent le rouleau d'étirage (11, 11') par un couple de rotation.

**6.** Système tendeur de fil métallique selon la revendication 5, dans lequel les moyens correspondent à un moteur de rouleau d'étirage qui entraîne le rouleau d'étirage (11, 11').

7. Système tendeur de fil métallique selon l'une quelconque des revendications précédentes, dans lequel de plus, des moyens sont prévus qui sollicitent le rouleau de freinage (7, 7') par un couple de rotation.

8. Système tendeur de fil métallique selon la revendication 7, dans lequel les moyens supplémentaires correspondent à un moteur de rouleau de freinage qui freine le rouleau de freinage (7, 7').

9. Système tendeur de fil métallique selon l'une quelconque des revendications précédentes, dans lequel l'électrode de traitement insérée (2, 2') enlace le rouleau de freinage (7, 7') au moins presque une fois et se trouve avec le rouleau de freinage (7, 7') dans un engagement actif dû à des forces de frottement.

10. Système tendeur de fil métallique selon l'une quelconque des revendications précédentes, dans lequel l'électrode de traitement insérée (2, 2') enlace le rouleau d'étirage (11, 11') au moins presque une fois et se trouve avec le rouleau d'étirage (11, 11') dans un engagement actif dû à des forces de frottement.

11. Système tendeur de fil métallique selon l'une quelconque des revendications précédentes, dans lequel des moyens sont prévus pour mesurer la tension du fil métallique.

12. Système tendeur de fil métallique selon la revendication 11, dans lequel un rouleau de renvoi (4) est prévu qui est fixé par l'intermédiaire de moyens formant ressort (32) à la machine d'électroérosion (1), et les moyens de mesure déterminent, par l'intermédiaire de la position de ce rouleau de renvoi (4), des moyens formant ressort (32) et/ou d'autres moyens auxiliaires, la tension du fil métallique respectivement appliquée.

13. Système tendeur de fil métallique selon la revendication 11 ou 12, dans lequel un dispositif de commande est prévu qui commande un écoulement fluidique généré par la tuyère (13, 13', 13a) en fonction de la tension du fil métallique mesurée par les moyens et/ou de valeurs théoriques.

14. Système tendeur de fil métallique selon l'une quelconque des revendications précédentes, dans lequel des alésages de décharge (19a', 19b', 27a', 27b') sont prévus à travers lesquels un fluide pauvre en énergie peut sortir.

15. Système tendeur de fil métallique selon l'une quelconque des revendications précédentes, dans lequel le rouleau d'étirage et/ou le rouleau de freinage (11, 11' ; 7, 7') est réalisé comme un disque cylindrique, dans lequel une rainure périphérique régulière est prévue respectivement, et cette rainure s'amincit de façon symétrique par rapport au milieu de la surface latérale et en direction de l'axe du disque.

16. Système tendeur de fil métallique selon l'une quelconque des revendications précédentes, dans lequel des moyens de rappel de type filetage pour guider et/ou rappeler l'électrode dans la position axiale souhaitée sont prévus sur le rouleau d'étirage et/ou le rouleau de freinage.

17. Système tendeur de fil métallique selon l'une quelconque des revendications précédentes, dans lequel le rouleau d'étirage et/ou le rouleau de freinage sont réalisés en deux parties, les deux parties formant une rainure intermédiaire pour le guidage de l'électrode.

18. Procédé pour tendre une électrode de traitement filiforme (2, 2') dans un dispositif d'électroérosion (1), dans lequel l'électrode de traitement (2, 2') enlace au moins en partie un rouleau de freinage (7, 7') disposé dans la zone d'amenée de fil métallique et/ou un rouleau d'étirage (11, 11') disposé dans la zone d'évacuation de fil métallique, **caractérisé en ce qu'**une tuyère (13, 13', 13a), traversée par un fluide, est disposée dans le sens de marche du fil métallique avant le rouleau de freinage et/ou dans le sens de marche du fil métallique après le rouleau d'étirage, et attribuée au rouleau de freinage ou au rouleau d'étirage, l'électrode de traitement (2, 2') étant guidée à travers ladite tuyère, et dans lequel la tuyère (13, 13', 13a) traversée par un fluide exerce sur l'électrode de traitement (2, 2') une force de traction de base s'éloignant du rouleau de freinage et/ou d'étirage afin de générer une tension active dans la zone de travail en provoquant un engagement actif, dû au frottement, entre l'électrode de traitement (2, 2') et le rouleau de freinage et/ou d'étirage.

FIG. 1

FIG. 2

FIG. 3

FIG. 4

FIG. 5

FIG. 6

FIG. 7